# EUROPÄISCHE PATENTANMELDUNG

(11) **EP 1 772 676 A2**
(43) Veröffentlichungstag der Anmeldung: **11.04.2007**
(21) Anmeldenummer: 06020995.4
(22) Anmeldetag: 06.10.2006

(54) **Wärmetauschereinrichtung**

(30) Priorität: 10.10.2005 AT 6872005
(71) Anmelder: Ganglberger, Hebert, 4211 Alberndorf (AT); Reindl, Andreas, 4210 Gallneukirchen (AT)
(72) Erfinder: Ganglberger, Hebert, 4211 Alberndorf (AT); Reindl, Andreas, 4210 Gallneukirchen (AT)
(74) Vertreter: Landgraf, Elvira

(57) **Zusammenfassung**

Die Erfindung betrifft eine Wärmetauschereinrichtung, die zwei Wasserkreisläufe aufweist, dadurch gekennzeichnet, dass das Kaltwasser unter Ausnutzung des vollen Leitungsdrucks eingespeist wird, wobei der Kaltwasserdruck und die Fließgeschwindigkeit des Kaltwassers zum Antrieb Pumpe des Heizungskreislaufs verwendet werden.

## Beschreibung

Die Erfindung betrifft einen Wärmetauscher, der unter Ausnützung des Kaltwasserdrucks gespeist und betrieben wird.

Wärmetauscher und Wärmetauschersysteme sind bekannt. Diese Systeme weisen zwei Wasserkreisläufe auf, den ersten Wasserkreislauf, in dem das Heizungswasser zirkuliert, und einen zweiten Wasserkreislauf, in dem im Gegenstrom die Warmwasseraufbereitung erfolgt.

Dabei werden zum Betreiben des Heizungskreislaufs Pumpen benutzt, die durch elektrische Energie betrieben werden.

Das Kaltwasser wird dabei üblicherweise unter einem Druck von etwa 3 bis 4 bar zugeführt.

Aufgabe der Erfindung war es eine Wärmetauschereinrichtung bereitzustellen, wobei der Kaltwasserdruck und die Fließgeschwindigkeit des Kaltwassers zusätzlich genutzt wird.

Gegenstand der Erfindung ist daher eine Wärmetauschereinrichtung, die zwei Wasserkreisläufe aufweist, dadurch gekennzeichnet, dass das Kaltwasser unter Ausnutzung des vollen Leitungsdrucks eingespeist wird, wobei der Kaltwasserdruck und die Fließgeschwindigkeit des Kaltwassers zum Antrieb der Pumpe des Heizungskreislaufs verwendet werden.

Der Leitungsdruck einer Kaltwasserleitung beträgt üblicherweise etwa 4 bar. Erfindungsgemäß wird das Kaltwasser nun mit diesem Druck eingespeist.

Dabei wird unter Ausnutzung des Drucks und der Fließgeschwindigkeit über geeignete Einrichtungen die Pumpe des Heizungskreislaufs angetrieben.

Geeignete Einrichtungen sind beispielsweise eine Verbindungswelle, Turbinen, Zahn- oder Flügelräder, Magnetkraftübertragung und dergleichen.

Es ist daher keine externe, z.B. elektrische Energie zum Betreiben der Umwälzpumpe für den Heizungskreislauf notwendig.

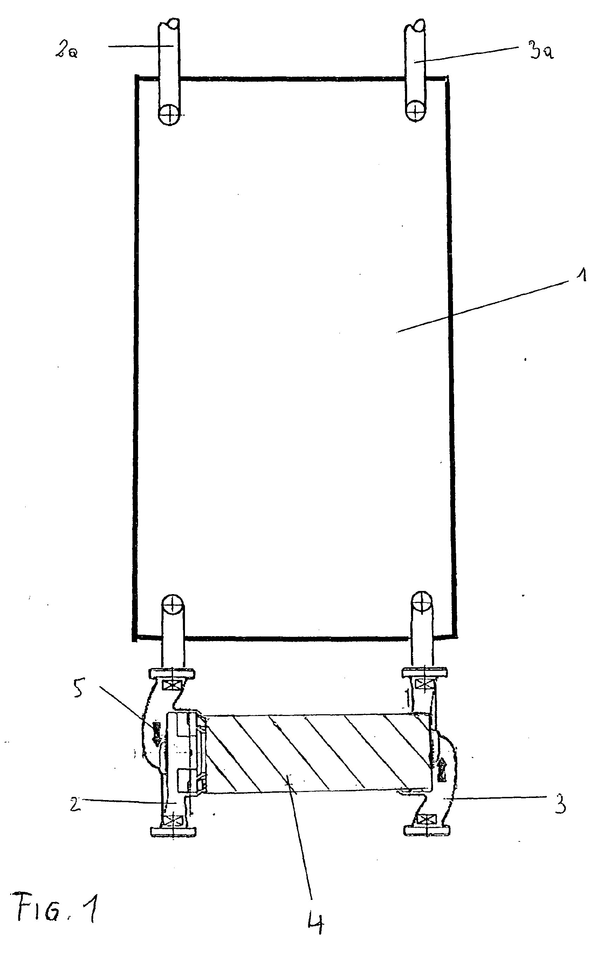

In Fig. 1 ist eine erfindungemäße Wärmetauschereinrichtung dargestellt. Dabei bedeuten 1 den Wärmetauscher, 2 des Heizungsrücklauf, 2 a den Heizungsvorlauf, 3 den Kaltwasserzulauf, 3a den Warmwasserablauf (Entnahme), 4 die Einrichtung zur Übertragung des Kaltwasserdrucks, 5 die Pumpe des Heizkreislaufs.

Vorzugsweise wird als Wärmetauscher ein Plattenwärmetauscher verwendet, es ist aber auch möglich alle bekannten Wärmetauschereinrichtungen bei geeigneter Leistung zu verwenden.

## Patentansprüche

1. Wärmetauschereinrichtung, die zwei Wasserkreisläufe aufweist, **dadurch gekennzeichnet, dass** das Kaltwasser unter Ausnutzung des vollen Leitungsdrucks eingespeist wird, wobei der Kaltwasserdruck und die Fließgeschwindigkeit des Kaltwassers zum Antrieb Pumpe des Heizungskreislaufs verwendet werden.

2. Wärmetauschereinrichtung nach Anspruch 1, **dadurch gekennzeichnet, dass** zum Antrieb der Pumpe des Heizungskreislaufs keine elektrische Energie nötig ist.

3. Wärmetauscheinrichtung nach einem der Ansprüche 1 oder 2, **dadurch gekennzeichnet, dass** die Übertragung des Kaltwasserdrucks über geeignete Einrichtungen, wie Verbindungswelle, Turbinen, Zahn- oder Flügelräder, Magnetkraftübertragung oder dergleichen erfolgt.
